# DEMANDE DE BREVET EUROPEEN

(11) **EP 2 810 761 A1**
(43) Date de publication de la demande: **10.12.2014**
(21) Numéro de dépôt: 14175321.0
(22) Date de dépôt: 19.05.2006
(51) Int. Cl.: B29C 47/20, B29C 47/50, B29C 47/16, B29C 47/88, B29C 47/00

(54) **Procédé de fabrication d'une plaque alvéolaire**

(30) Priorité: 20.05.2005 FR 0551320
(62) Demande divisionnaire de: 06114253.5
(71) Demandeur: DS Smith Kaysersberg, 68320 Kunheim (FR)
(72) Inventeur: Coste, Jean Philippe, 68240 Kaysersberg (FR); Porret, Laurent, 68180 Horbourg-Wihr (FR); Klinger, Yves, 67600 Muttersholtz (FR)
(74) Mandataire: Gevers France

(57) **Abrégé**

L'invention porte sur un procédé de fabrication d'une plaque alvéolaire, comportant deux parois de couverture espacées l'une de l'autre (12, 14) et reliées entre elles par des entretoises (16), par extrusion de matière plastique à travers une filière entre les lèvres de laquelle sont ménagés au moins deux canaux de laminage reliés par une pluralité de fentes ouvertes dans la direction d'extrusion, le procédé est caractérisé par le fait que les canaux de laminage sont alimentés indépendamment l'un de l'autre à partir de deux sources de matière distinctes, et les fentes sont alimentées à partir des canaux de laminage, en particulier les canaux de laminage sont alimentés par chacune par une extrudeuse.
On permet ainsi la réalisation de plaques présentant des propriétés différentes, et dont le caractère est renforcé par l'emploi de matériaux choisis"

L'invention porte aussi sur les plaques obtenues selon le procédé.

## Description

L'invention concerne le domaine des plaques alvéolaires en matière plastique.

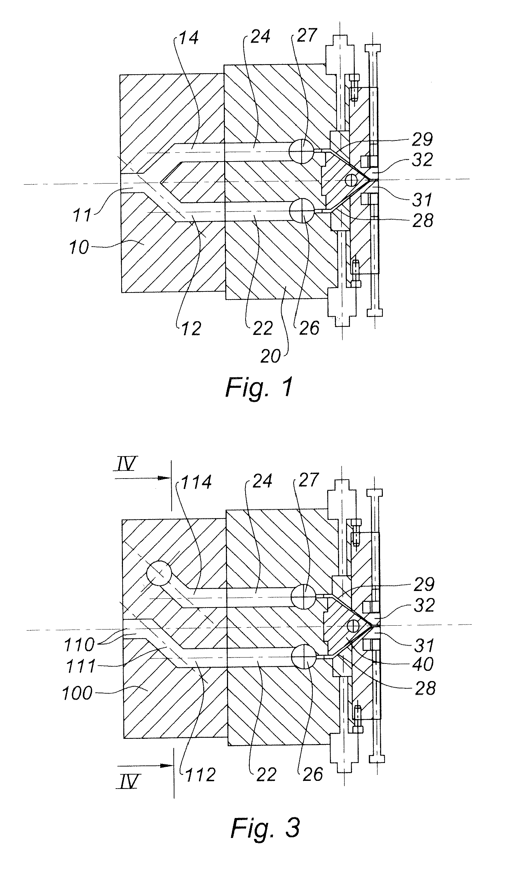

La fabrication de plaques alvéolaires en matière thermoplastique, telle qu'une polyoléfine, est en soi bien connue. Ces plaques sont constituées de deux nappes planes parallèles, que l'on désigne sous le terme de couvertures, reliées entre elles par des parois orientées selon une même direction parallèle aux couvertures et formant entretoises. Elles définissent des canaux ou alvéoles. Ces structures peuvent également contenir des parois internes, par exemple parallèles aux couvertures, pour en améliorer le caractère isolant, ainsi que des parois inclinées en diagonales pour en augmenter la rigidité. Elles sont fabriquées par extrusion d'une matière plastique à travers une filière plane de forme appropriée, suivie du passage entre des parois de calibrage contre lesquelles les couvertures sont maintenues appliquées par aspiration pendant le refroidissement. L'écartement des parois définit l'épaisseur de la plaque. Une telle installation est représentée partiellement sur la figure 1.

Les propriétés mécaniques ou de rigidité sont données par l'utilisation et le choix des matières premières ou de composition de matières. On joue sur la composition pour par exemple augmenter les propriétés mécaniques des plaques ainsi fabriquées telle que la résistance aux chocs.

Dans le cas de plaques réalisées en une matière telle qu'une polyoléfine et de structure simple, c'est à dire constituées de cloisons ou entretoises perpendiculaires aux couvertures, on constate cependant que, comme on l'a mentionné ci-dessus, lors de la formation et du passage entre les parois de calibrage notamment, la partie verticale est étirée sur une amplitude plus ou moins importante en fonction de l'épaisseur souhaitée par rapport à l'épaisseur du poinçon.

Il serait souhaitable et c'est un premier objectif de l'invention, de pouvoir contrôler la formation des entretoises afin de mieux maîtriser les propriétés mécaniques des plaques produites.

Selon un autre objectif de l'invention, en assurant un contrôle de la formation des entretoises on cherche à obtenir des plaques présentant des caractéristiques mécaniques différentes sur les deux faces. Par exemple dans une utilisation comme plaque intercalaire de palettes de transport de bouteilles, il serait souhaitable qu'une face soit plus souple pour permettre le calage et améliorer l'amortissement aux chocs.

Conformément à l'invention, on parvient à réaliser ces objectifs avec un procédé de fabrication d'une plaque alvéolaire, comportant deux parois de couverture espacées l'une de l'autre et reliées entre elles par des cloisons, par extrusion de matière plastique à travers une filière entre les lèvres de laquelle sont ménagés au moins deux canaux de laminage reliés par une pluralité de fentes ouvertes dans la direction d'extrusion, caractérisé par le fait que les canaux de laminage sont alimentés indépendamment l'un de l'autre à partir de sources de matière distinctes, et les fentes sont alimentées à partir des canaux de laminage.

On a en effet constaté avec surprise qu'en alimentant les deux canaux de laminage indépendamment l'un de l'autre, on pouvait contrôler la formation des entretoises, obtenir par exemple des entretoises plus épaisses que celles que l'on obtient avec une alimentation conventionnelle ou bien avoir des entretoises d'épaisseur contrôlée d'un côté à l'autre, ou encore, en choisissant convenablement les paramètres des entretoises, influer sur les propriétés mécaniques des parois de couvertures.

Le procédé de l'invention se distingue des techniques de co-extrusion déjà appliquées dans le domaine pour fabriquer des plaques, en matière thermoplastiques mais non polyoléfine, comportant une ou plusieurs couches en surface pour la protection contre les UV. On obtient ces plaques par co-extrusion d'une matière chargée en agent de protection avec la matière de la plaque. Ces couches sont en général de très faible épaisseur (quelques dizaines de microns) et positionnées sur les faces tournées vers l'extérieur.

Selon les applications, les canaux sont alimentés avec des matières différentes ou bien ils sont alimentés avec des matières identiques de telle façon que les entretoises aient une épaisseur homogène d'une couverture à l'autre. Les canaux de laminage peuvent être alimentés à des pressions différentes ou encore ils peuvent être alimentés avec des matières de viscosités ou de fluidités différentes.

On présente plus en détail le procédé de l'invention dans la description qui suit de différents modes de réalisation non limitatifs de l'invention, en référence aux dessins annexés sur lesquels :
- la figure 1 montre une filière de l'art antérieur, vue en coupe transversale selon un plan parallèle à la direction d'extrusion,
- la figure 2 montre partiellement la filière de la figure 1 vue depuis la façade d'extrusion en perspective,
- la figure 3 montre une filière incorporant un bloc d'alimentation modifié selon l'invention,
- la figure 4 montre une coupe selon la direction IV-IV de la figure 3,
- les figures 5 à 8 montrent, vues en coupe transversale, des plaques obtenues selon le procédé de l'invention.

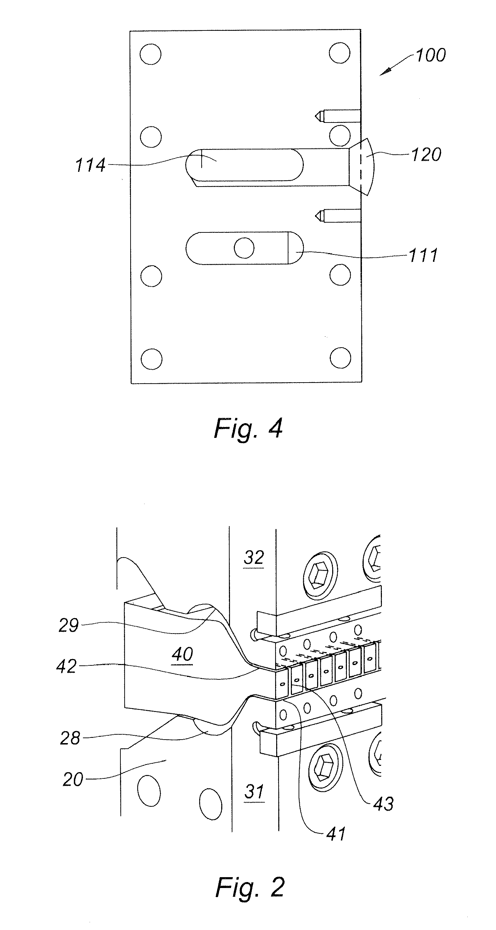

On décrit une filière de l'art antérieur en référence aux figures 1 et 2. La filière comprend un bloc d'alimentation 10 avec un canal d'alimentation 11 à section oblongue à l'entrée. Le canal 11 se divise en deux canaux 12 et 14, l'un supérieur, l'autre inférieur. Le bloc 10 est solidaire de la tête de filière 20. Les deux canaux 12 et 14 communiquent avec deux canaux 22 et 24 qui débouchent chacun dans un conduit, 26 et 27, horizontal et perpendiculaire au plan de la figure 1. Ces conduits alimentent, par des perçages pratiqués sur leur longueur, chacun un canal de laminage 28 et 29. Ces canaux s'étendent sur toute la largeur de la filière et se rapprochent l'un de l'autre dans le sens de l'extrusion, jusqu'au lèvres de la filière, 31 et 32. En se reportant à la figure 2, on voit plus en détail la partie aval de la filière.

Les canaux de laminage 28 et 29 sont délimités par le poinçon 40 d'une part et le bloc de tête de filière 20 avec les lèvres 31, 32 d'autre part. Les pièces formant les lèvres 31 et 32 peuvent être ajustées pour former un étranglement sur toute la largeur des canaux. La filière peut comprendre aussi des barres d'étranglement, ici non représentées, permettant un réglage de l'épaisseur de la veine sur la largeur de la filière. La partie aval du poinçon est en forme de peigne avec des parois 41 et 42 horizontales. Les parois sont à distance déterminée des lèvres 31 et 32. Des fentes 43, ici perpendiculaires aux parois 41 et 42, sont ménagées à intervalles réguliers sur toute la largeur du poinçon.

La matière fournie par l'extrudeuse non représentée, est introduite dans le canal d'alimentation 11. Elle se divise en deux flux et est laminée dans les canaux de laminage 28 et 29 jusqu'à former deux nappes parallèles au niveau de la partie aval de la filière entre les parois 41 et 42 du poinçon et les lèvres 31 et 32. Une quantité de matière est dérivée dans les fentes 43 où elle forme des cloisons ou entretoises délimitant des alvéoles ou canaux parallèles au sens d'avancement. A la sortie de la filière, la plaque à section alvéolaire ainsi formée, encore à l'état pâteux, est dirigée par étirement entre deux panneaux formant un calibre et où sa forme est figée. La matière est maintenue par aspiration contre les panneaux qui sont parcourus par un fluide de refroidis pour évacuer la chaleur de la plaque et assurer son refroidissement.

On note que pour une plaque dont la hauteur est égale ou inférieure à celle du poinçon, l'étirement s'effectue dans le sens de l'extrusion et est due principalement à la vitesse de tirage de la plaque. Pour une plaque avec une hauteur supérieure à celle du poinçon, l'étirement comprend aussi une composante verticale.

Cette installation de l'art antérieur présente des possibilités de réglage des paramètres d'extrusion limitées dans la mesure où le flux de matière est réparti symétriquement entre les deux canaux de laminage.

En particulier l'étirement peut conduire à un affaiblissement de la portion centrale de l'entretoise, son épaisseur est réduite par rapport aux portions près des couvertures.

Conformément à l'invention, on accroît la flexibilité de l'installation en alimentant les deux canaux de laminage de façon indépendante.

Les figures 3 et 4 montrent l'installation modifiée. Les éléments communs à la filière de la figure 1 portent la même référence. Le bloc d'alimentation 10 de la figure 1 a été remplacé par le bloc d'alimentation 100. Ce bloc comporte une première entrée axiale 110 pour un canal 111. L'entrée est reliée à l'extrudeuse axiale, non représentée, de l'installation initiale. Celle-ci constitue la première source de matière plastique. Le canal 111 alimente le canal 22 de la filière.

Le bloc 100 comporte une deuxième entrée 120 qui est disposée latéralement par rapport à la première. Le canal d'entrée 121 est ici perpendiculaire à la direction de la première entrée mais il pourrait être orienté selon un autre angle, 60° par exemple.

Le canal d'entrée 121 débouche dans le canal 114 qui est dans le prolongement du canal 24 avec lequel il communique.

Ce nouveau bloc d'alimentation 100 permet la mise en place d'une deuxième source de matière plastique fondue, telle qu'une deuxième extrudeuse. Cette installation autorise de nouvelles combinaisons, notamment :
- alimentation de matières différentes,
- alimentation de matières présentant des propriétés rhéologiques différentes, notamment une viscosité différente,
- alimentation de matières à des pressions différentes.

Pour permettre une large plage de contrôle de l'alimentation, les deux extrudeuses sont de préférence capables d'assurer chacune, seule, le débit total correspondant à la fabrication d'une plaque.

Comme pour les installations de l'art antérieur, la gamme de plaques qu'il est possible de fabriquer ainsi va de 150 g/m² à 4000 g/m² en grammage, préférentiellement entre 250 et 3000 g/m² pour des épaisseurs comprises entre 1 et 20 mm, préférentiellement entre 1,8 et 14 mm. La matière est thermoplastique et en particulier, une polyoléfine telle que le polypropylène.

Un but de la présente invention est d'obtenir à partir d'une même structure de plaque et de deux extrudeuses des propriétés différentes entre les parties supérieures et inférieures, en ayant sur la hauteur de l'entretoise des épaisseurs différentes via une technique de bi-extrusion. Celle-ci peut permettre également d'avoir des propriétés de couvertures ou de surfaces différentes.

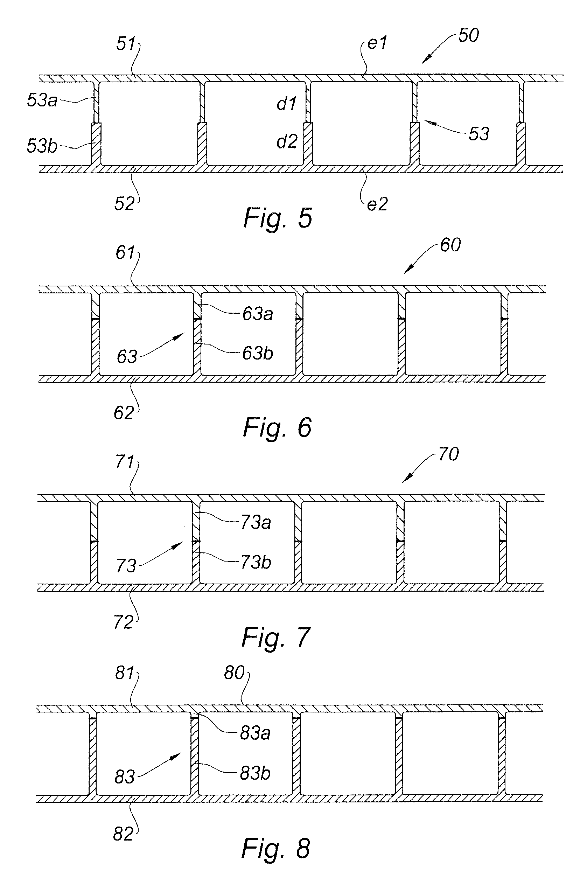

On décrit maintenant des applications non limitatives du procédé de l'invention.
a) La plaque 50 de la figure 5 présente une dissymétrie entre les deux faces. La couverture 51 a une épaisseur e1, et la deuxième couverture 52 une épaisseur e2. Les entretoises 53 qui les relient présentent une épaisseur d1 sur une partie 53a de leur hauteur, ici sensiblement à mi-hauteur, et une épaisseur d2 sur la partie 53b restante. On a obtenu ainsi une plaque présentant les caractéristiques : e1>e2 et d1<d2, en alimentant la couverture supérieure avec une matière identique à la couverture inférieure mais présentant une viscosité plus faible, les pressions étant sensiblement les mêmes dans les deux canaux de laminage.
On a fabriqué une plaque, d'épaisseur de 3,5 mm et de grammage 800 g/m², en alimentant les canaux avec des extrudeuses dont la pression de sortie des pompes était de 115 bars et 113 bars respectivement. La pression dans les canaux de laminage était de 71 et 65 bars. Les valeurs étaient : d1 = 0,2 mm et d2 = 0, 3 mm. Ces valeurs sont à comparer à celle d'une plaque obtenue de façon standard soit 0,18 mm.
On obtient aussi une structure telle que représentée sur la figure 5 en combinant cette technique à un choix de matière. Notamment elle est obtenue à partir de deux matières thermoplastiques ayant une différence d'indice de fluidité (mesuré à 230°C et 2,16 kg selon la norme ISO 1133) entre les deux matières d'au moins 2g/10min. sur une plaque : 3,5 mm et 800 g/m² on arrive alors à une différence d'épaisseur d'entretoise de 0,1 mm.
L'amélioration des propriétés mécaniques apparaît sur le tableau de résultats de mesures comparatives effectuées sur deux plaques obtenues l'une à partir d'une seule matière l'autre à partir de deux matières.

| | | |
|---|---|---|
| | 3,5 mm - 800 g/m² | 3,5 mm - 800 g/m² |

| Procédé | Extrusion | Bi-extrusion |
|---|---|---|
| Rupture en flexion sens extrusion (ISO178(N)) | 44 | 48 |
| Rupture en flexion sens travers (ISO178(N)) | 22 | 26 |
| Ecrasement à plat selon NF EN 23035 en Kpa | 1100 | 1300 |
| Matières | Matière 1 | Matière 1 ; matière 2 |

Les matières utilisées étaient référencées PPC3660 de grade 1,3g/10min pour l'une et PPC 4660 de grade 3 ,5 g/10min pour l'autre.
On constate une amélioration des trois propriétés mécaniques.
b) Les plaques des figures 6 et 7 présentent des plaques 60 et 70 avec des couvertures 61, 62 et 71, 72 respectivement, et des hauteurs différentes de séparation des deux parties de l'entretoise 63a, 63b et 73a 73b, que l'on a obtenues en agissant sur les pressions d'admission de la matière dans les canaux de laminage. Les parties 63a, 73a ont été obtenues depuis le canal 29 et la face 61, 71. Les parties 63b, 73b viennent du canal 28 et des faces 62, 72 respectivement. Sur les réalisations représentées les hauteurs sont 1/3 - 2/3 pour 63a et 63b, 1/2 - 1/2 pour 73a 73b. Les rapports peuvent être différents. La matière était la même pour les deux extrudeuses.

| Plaques | Pression sortie pompe extrudeuse latérale (bars) | Pression sortie pompe extrudeuse axiale (bars) | Pression dans le canal de laminage 29 (bars) | Pression dans le canal de laminage 28 (bars) | Epaisseur entretoise relevée/ épaisseur correspondante extrusion standard (mm) |
|---|---|---|---|---|---|
| 2mm 320g/m² | 142 | 99 | 84 | 68 | 0,18/0,15 |
| 3,5mm 800g/m² | 170 | 115 | 97 | 65 | 0,25/0,18 |
| 5mm 1200g/m² | 188 | 124 | 107 | 85 | 0,25/0,15 |

On constate que l'on peut jouer sur la différence de pression entre les deux canaux de laminage à différents grammages pour obtenir des hauteurs différentes, mais aussi on accroît l'épaisseur de l'entretoise.
On a effectué des mesures comparatives entre des plaques extrudées simples et des plaques bi- extrudées (exemple 2 mm 320 g/m² du tableau précédent).

| | | |
|---|---|---|
| | 2 mm - 320 g/m² | 2 mm - 320 g/m² |

| Procédé | Extrusion | Biextrusion |
|---|---|---|
| Matières | Matières 1 | Matière 1 ; matière 1 Ou matière 1 ; matière recyclée |
| Rupture en flexion sens extrusion (ISO178(N)) | 6,7 | 6,8 |
| Rupture en flexion sens travers (ISO(N)) | 1,6 | 2,0 |
| Ecrasement a plat selon NF EN 23035 (Kpa) | 400 | 540 |

On constate une amélioration des propriétés par la biextrusion. En outre les résultats sont les mêmes si on utilise la matière 1 dans les deux extrudeuses ou si on utilise la matière 1 dans une extrudeuse et une matière recyclée dans l'autre en proportion finale dans la plaque 50/50. Une matière recyclée est une matière qui a subi déjà une extrusion. Cette amélioration des propriétés est due notamment à l'épaisseur d'entretoise qui est plus homogène d'une couverture à l'autre.
c) La plaque 80 de la figure 8 présente une couverture supérieure 81 et inférieure 82. Les entretoises 83 sont venues essentiellement depuis le canal de laminage inférieur 28 et la face 82. La partie supérieure 83a est de hauteur très faible à la limité nulle. L'entretoise est formée pratiquement par la partie 83b.

| Plaques | Pression sortie pompe extrudeuse latérale 2 (bars) | Pression sortie pompe extrudeuse axiale (bars) | Pression canal 29 (bars) | Pression canal 28 (bars) | Epaisseur entretoise relevée/ épaisseur correspondante extrusion standard (mm) |
|---|---|---|---|---|---|
| 3 mm - 450 g/m² | 140 | 111 | 83 | 68 | 0,12/0,10 |

On a constaté que la surface de la couverture 81 était plus lisse. La zone de jonction entre les entretoises et la couverture ne subit pas de retrait au moment de l'étirement en sortie de filière.
On a effectué des mesures comparatives entre des plaques issues du procédé d'extrusion connu et une plaque formée par bi-extrusion. Elles sont rapportées ci-après

| | 3 mm- 450 g/m² | 3 mm - 450 g/m² |
|---|---|---|
| Procédé | Extrusion | Biextrusion |
| Matières | Matière 1 | Matière 1 ; matière 1 |
| Rugosimètre Bendsten (ml/mm) selon ISO8791-2 | Moyenne 900 avec un maximum de 1400 ponctuel | Moyenne 500 avec un maximum ponctuel de 800 |

On constate que d'appliquer le procédé avec des alimentations identiques sur les deux faces permet une amélioration nette de la propriété recherchée. Plus généralement la rugosité mesurée avec le rugosimètre Bendsten sur une plaque biextrudée est en moyenne inférieure de 40% à celle qui est mesurée sur une plaque obtenue dans les mêmes conditions par extrusion simple.

Une telle plaque trouve une application avantageuse dans le domaine de l'impression

Le procédé de l'invention permet ainsi d'obtenir des plaques présentant des propriétés spécifiques en fonction de l'utilisation envisagée.

Dans le domaine de l'emballage, par exemple, on ménage une face souple et une face rigide en jouant ainsi sur les propriétés de flexion et de compression
- pour une application en tant qu'intercalaire : la partie souple par exemple est susceptible de créer un logement pour la bouteille qui est posée sur la couverture supérieure, évitant un basculement de celle-ci durant les phases de transport ou de stockage, tout en ayant sur l'autre côte de la plaque une couverture rigide assurant la stabilité du lit de bouteille.

On a mesuré des propriétés sur deux plaques, l'une issue de l'extrusion connue, l'autre de l'extrusion selon l'invention

| | 2 mm - 400 g/m² | 2 mm - 400 g/m² |
|---|---|---|
| Procédé | Extrusion | Biextrusion |
| Matière | Matière standard | Matière souple ; matière standard |
| Angle de glissement (°) | 16 | 24 |
| Résistance au choc (Joule) | 8 | 11 |
| Ecrasement ) plat selon NF EN 23035 | 650 | 350 |

L'angle de glissement et la résistance au choc sont mesurés selon des tests internes. La mesure de l'angle de glissement s'effectue à l'aide d'un plateau incliné avec une motorisation de 1°/seconde, les résultats sont exprimés en degrés. Pour la résistance au choc, on lâche de différentes hauteurs, une bille de diamètre 60 mm et de masse 1kg à une température de - 20 °C, On note la hauteur pour laquelle il y a rupture ou fissure de l'échantillon ; les résultats sont exprimés en Joules.

Quels que soient les tests, les valeurs ci-dessus montrent une amélioration sensible des propriétés recherchées pour ce type d'application.
- pour une application comme caisse ou ceinture : la partie souple est la face intérieure pour que les pièces puissent venir au contact et se caler sans calage rapporté supplémentaire. La partie externe rigide assure stabilité et résistance de l'emballage durant le transport. On a effectué des essais comparatifs également. Ils révèlent une amélioration des propriétés de flexion de 20% dans le sens de l'extrusion et de 30% dans le sens travers par rapport au procédé simple extrusion sur une plaque de 3 mm et 450 g/m²
- Selon une autre mise en oeuvre, en portant le débit au minimum de l'extrudeuse alimentant le canal supérieur on obtient une plaque avec une face inférieure lisse et une face supérieure ondulée ave la possibilité de réaliser des formats plaques mais aussi des rouleaux ;

Un autre avantage peut être économique où la différence d'épaisseur peut avoir également comme conséquence un gain de poids /m².

D'autres applications peuvent également être déclinées en mettant en oeuvre cette technique avec des matières ou additifs différents entre une couverture (A) et l'autre (B).

On donne les exemples suivants :

| Couverture (A) au contact du produit | Couverture (B) | Applications / propriétés |
|---|---|---|
| Matière souple | Matière standard | Calage / amortissement |
| Matière rigide | Matière standard | Gerbage/résistance à la compression |
| Dureté renforcée | Matière standard | déchets hospitaliers / résistance à la perforation |
| Matière conductrice résistance de surface entre 10³ et 10⁵ ohm/m² | Matière dissipative résistance de surface entre 10⁵ et 10¹¹ ohm/m² | pièces informatiques / propriétés électrostatiques |
| Inhibiteur de corrosion | Matière standard | pièces métalliques / anticorrosion |
| Matière standard | Retardateur de flamme | résistance au feu / norme électrique, / bâtiment, automobile |
| Couleur 1 | Couleur 2 | propriétés optiques |
| Matière conductrice ou Matière dissipative | Couleur | Plaque, container, ceinture / propriétés électrostatiques / aspect |
| Matière 1 | Matière 2 | Matières thermoplastiques de natures différentes |
| Matière standard | Matière recyclée | Norme/environnement, aspect économique |

Une matière souple présente un faible module de flexion, c'est-à-dire de l'ordre de 300MPa ou inférieur, selon la norme ISO 178. On a utilisé le produit référencé Adflex Q 100F avec un module de 100MPa de la société Basell ou Adflex T 100F.

Une matière rigide présente un module de flexion élevé. On cite comme exemple une matière homopolymère polypropylène référence 3060 avec un module de 1450 MPa de la société Total Petrochemicals, et également la référence PM750 polypropylène homopolymère avec charges minérales d'un module de 5000 MPa de la société Repsol.

Une matière standard est par exemple une matière polypropylène copolymère telles que : PPC 3660 de la société Total Petrochemicals ou 83 EK 10 de la société Sabic.

On a effectué des mesures pour certaines des combinaisons ci-dessus.

Pour les pièces informatiques, on a mesuré pour l'exemple de biextrusion, une résistance de surface, selon ASTM D-257, de 10³ ohm/m² pour la couverture conductrice et de 10⁹ ohm/m², selon la norme IEC 61340, pour la face dissipative.

On s'affranchit ainsi de difficultés liées à l'utilisation des matières propres, par exemple
- une plaque réalisée avec une matière conductrice est en général difficilement imprimable ; avec la solution de l'invention et une couverture en matière standard elle devient imprimable sur cette dernière tout en protégeant le produit à l'intérieur.
- Une matière dissipative est très difficilement soudable ; avec une matière standard en couverture externe de l'emballage, on permet la transformation de la plaque par soudage.

## Revendications

1. Procédé de fabrication d'une plaque alvéolaire, comportant deux parois de couverture espacées l'une de l'autre et reliées entre elles par des entretoises, par extrusion de matière plastique à travers une filière entre les lèvres de laquelle sont ménagés au moins deux canaux de laminage reliés par une pluralité de fentes (43) ouvertes dans la direction d'extrusion, **caractérisé par le fait que** les canaux de laminage (28, 29) sont alimentés indépendamment l'un de l'autre à partir de deux sources de matière distinctes, et les fentes (43) sont alimentées à partir des canaux de laminage.

2. Procédé selon la revendication 1 selon lequel les canaux de laminage sont alimentés par chacune par une extrudeuse différente.

3. Procédé selon l'une des revendications 1 et 2 selon lequel la matière dans chaque canal de laminage est une polyoléfine.

4. Procédé selon la revendication 3 selon lequel les canaux sont alimentés avec des matières différentes.

5. Procédé selon la revendication 3, selon lequel les canaux sont alimentés avec des matières identiques de telle façon que les entretoises aient une épaisseur homogène d'une couverture à l'autre.

6. Procédé selon l'une des revendications précédentes, selon lequel les canaux de laminage sont alimentés à des pressions différentes.

7. Procédé selon l'une des revendications précédentes, selon lequel les canaux de laminage sont alimentés avec des matières de viscosités ou de fluidités différentes.

8. Plaque alvéolaire obtenue selon l'une des revendications précédentes dont l'épaisseur des entretoises (53) mesurée à proximité d'une couverture (52) est supérieure à celle mesurée à proximité de l'autre couverture (51).

9. Plaque alvéolaire obtenue selon l'une des revendications 1 à 7 dont la rugosité mesurée avec le rugosimètre Bendsten est en moyenne inférieure de 40% à celle qui est mesurée sur une plaque obtenue dans les mêmes conditions par extrusion simple.

10. Plaque alvéolaire obtenue selon l'une des revendications 1 à 7 pour une application comme intercalaire présentant une couverture réalisée en un matériau plus souple que l'autre couverture.

11. Plaque alvéolaire obtenue selon l'une des revendications 1 à 7 pour une application comme emballage de produits sensibles aux décharges électriques dont une couverture est réalisée en un matériau de plus faible résistance de surface que l'autre couverture.
